# EUROPEAN PATENT APPLICATION

(11) **EP 4 675 776 A1**
(43) Date of publication of application: **07.01.2026**
(21) Application number: 24861817.5
(22) Date of filing: 20.08.2024
(51) Int. Cl.: H01M 50/112, H01M 50/204, H01M 50/258

(54) **BATTERY PACK AND ELECTRIC DEVICE**

(30) Priority: 08.09.2023 CN 202322447354 U
(71) Applicant: Contemporary Amperex Technology Co., Ltd., Ningde, Fujian 352100 (CN)
(72) Inventor: WU, Kai, Ningde, Fujian 352100 (CN); WANG, Guotao, Ningde, Fujian 352100 (CN); LI, Jiaqi, Ningde, Fujian 352100 (CN); HUANG, Yincheng, Ningde, Fujian 352100 (CN); LIU, Chen, Ningde, Fujian 352100 (CN)
(74) Representative: Ran, Handong
(86) International application number: PCT/CN2024/113267
(87) International publication number: WO 2025/050973

(57) **Abstract**

A battery pack and an electric device are provided. The battery pack (100) includes a box (10), an electrode post (20), a partition assembly (30), an electrode assembly (40), and an electrolyte, a sealed cavity (11) is defined within the box (10), the electrode post (20) is disposed at the box (10), the partition assembly (30) is disposed within the sealed cavity (11) and partitions the sealed cavity (11) into a plurality of independent mounting cavities (12), the electrode assembly (40) is arranged within at least a part of the mounting cavities (12), and the electrode assembly (40) is electrically connected to the electrode post (20); and the electrolyte is filled within the mounting cavities (12) in which the electrode assembly (40) is placed. By providing the partition assembly (30) within the box (10), the sealed cavity (11) can be divided into a plurality of independent mounting cavities (12) in which at least a part of the mounting cavities (12) are provided with the electrode assembly (40), and the mounting cavities (12) provided with the electrode assembly (40) are provided with the electrolyte, and thus, the space within the box (10) can be fully utilized, and the electrolyte and the electrode assemblies (40) can fully utilize the space in the mounting cavities (12), increasing an utilization rate of a space within the battery pack (100) to increase the grouping efficiency of the battery pack (100).

## Description

### CROSS-REFERENCE TO RELATED APPLICATIONS

The present application claims priority to Chinese Patent Application No. 202322447354.8, filed on September 08, 2023 and entitled "BATTERY PACK, AND ELECTRIC DEVICE", which is incorporated herein by reference in its entirety.

### TECHNICAL FIELD

The present application relates to the technical field of batteries, and in particular, to a battery pack, and an electric device.

### BACKGROUND

This section provides only background information related to the present disclosure and is not necessarily the prior art.

To improve an energy density of a battery pack, space within its box needs to be fully used. However, the battery pack has a relatively low inner space utilization rate in the prior art, causing low grouping efficiency for the battery pack.

### SUMMARY

In view of the above problem, the present application provides a battery pack, and an electric device, solving a problem of low grouping efficiency of a battery pack caused by a relatively low inner space utilization rate of a battery pack in the prior art.

A first aspect of the present application provides a battery pack including: a box within which a sealed cavity is defined;
an electrode post disposed at the box;
a partition assembly disposed within the sealed cavity and partitioning the sealed cavity into a plurality of independent mounting cavities;
an electrode assembly disposed in at least a part of the mounting cavities, the electrode assembly being electrically connected to the electrode post; and
an electrolyte filled in the mounting cavities in which the electrode assembly is placed.

The battery pack in the embodiment of this application, by providing the partition assembly within the box, may enable that the sealed cavity is divided into a plurality of independent mounting cavities in which at least a part of the mounting cavities are provided with the electrode assembly, and the mounting cavities provided with the electrode assembly are provided with the electrolyte, and thus, the space within the box can be fully utilized, and the electrolyte and the electrode assemblies can fully utilize the space in the mounting cavities, increasing an utilization rate of a space within the battery pack to increase the grouping efficiency of the battery pack.

In some embodiments of this application, the partition assembly includes at least one first separation plate, and the first separation plate is disposed within the box along a first direction which is a length direction or a width direction of the box. The embodiment of the present application, by the partition assembly including at least one first separation plate disposed within the box along the first direction, may enable that the sealed cavity is partitioned into at least two independent mounting cavities by the first separation plate, facilitating full utilization of each mounting cavity, and that the first separation plate is utilized to form a housing of a cell, reducing a space occupied by the housing of the cell.

In some embodiments of this application, the partition assembly further includes at least one second separation plate, and the second separation plate is disposed within the box along a second direction which intersects with the first direction. The embodiment of this application, by the partition assembly further including at least one second separation plate which is disposed within the box along the second direction, may enable that the sealed cavity is partitioned into a plurality of independent mounting cavities by the first separation plate and the second separation plate, facilitating full use of each mounting cavity to increase the energy density of the battery pack.

In some embodiments of the present application, the box includes a first cover body and a second cover body for encasing the box from two opposite sides, and the electrode post is provided on a side, facing the sealed cavity, of at least one of the first cover body and the second cover body. The embodiments of the present application, by disposing the first cover body, and the second cover body disposed opposite to each other, and disposing the electrode post at a side, facing the sealed cavity, of at least one of the first cover body and the second cover body, may enable that energy can be output outward by the electrode post.

In some embodiments of the present application, the box further includes a first side plate and a second side plate arranged opposite to each otherand the first side plate and the second side plate are respectively disposed at the two ends of the box along the first direction, and at least one of the first side plate, and the second side plate is provided with a mounting portion. The embodiments of the present application, by the first side plate, and the second side plate disposed at both ends of the box in the first direction, and at least one of the first side plate, and the second side plate provided with the mounting portion, may enable that installation of the battery pack can be achieved by the mounting portion, achieving fixation of the battery pack.

In some embodiments of the present application, an edge of the first cover body and/or the second cover body is provided with a mounting portion. The embodiments of the present application, by providing the mounting portion at the edges of the first cover body and/or the second cover body, may enable that the mounting portion and the first cover body and/or the second cover body can be integrated, facilitating processing.

In some embodiments of the present application, the box further includes a third side plate and a fourth side plate arranged opposite to each other, the third side plate and the fourth side plate are respectively disposed at the two ends of the box along the second direction, respectively, and the first side plate, the second side plate, the third side plate, the fourth side plate, the first cover body, and the second cover body enclose the sealed cavity. The embodiments of the present application, by combining the first side plate, the second side plate, the third side plate, the fourth side plate, the first cover body, and the second cover body to form the sealed cavity, may enable that the box is a rectangular structure, which is a simple structure, and can be easy to implement.

In some embodiments of the present application, at least one of the first cover body, and the second cover body is hermetically connected to the first side plate, the second side plate, the third side plate, and the fourth side plate. The embodiments of the present application, by hermetically connecting at least one of the first cover body, and the second cover body to the first side plate, the second side plate, the third side plate, and the fourth side plate, may achieve sealing of the sealing cavity, reducing the probability of electrolyte leakage within the sealing cavity.

In some embodiments of the present application, the box further includes a baffle plate, and one of the first side plate, the second side plate, the third side plate, and the fourth side plate, together with the baffle plate, the first cover body, and the second cover body, encloses an accommodating cavity. The embodiments of the present application, by disposing the baffle plate and forming the accommodating cavity by combining the baffle plate with the first cover body, the second cover body, and one of the first side plate, the second side plate, the third side plate, and the fourth side plate, may enable that electrical devices of a battery pack are placed in the accommodating cavity, achieving the function of the battery pack.

In some embodiments of this application, the battery pack further includes a heat exchange assembly disposed on the box or inside the partition assembly. The embodiments of this application, by disposing the heat exchange assembly and disposing the heat exchange assembly on the box or inside the partition assembly, may achieve heat exchange for the battery pack.

In some embodiments of this application, the heat exchange assembly includes a heat exchange plate, and at least one of the first cover body and the second cover body has its side, which faces away from the sealed cavity, attached to the heat exchange plate. The embodiments of this application, by disposing the heat exchange plate and abutting the side, away from the sealed cavity, of at least one of the first cover body, and the second cover body against the heat exchange plate, may achieve heat exchange for the battery pack by the heat exchange plate.

In some embodiments of the present application, at least a partial surface of the partition assembly, and an inner surface of the box are provided with an insulating layer, or both the partition assembly and the box are insulating members. The embodiments of the present application, by providing the insulating layer for at least a partial surface of the partition assembly and the inner surface of the box, or providing both the partition assembly and the box as the insulating members, may improve the box in terms of an insulation property.

In some embodiments of the present application, the battery pack includes a plurality of electrode assemblies and a plurality of electrode posts corresponding to the plurality of electrode assemblies, and the plurality of electrode posts are provided on a side, facing the sealed cavity, of at least one of the first cover body, and the second cover body. The embodiments of the present application, by providing the plurality of electrode posts at a side, facing the sealed cavity, of at least one of the first cover body, and the second cover body, may enable integrated provision of the plurality of electrode posts, facilitating installation of the plurality of electrode posts. A second aspect of the present application provides an electric device including the battery pack mentioned in the above embodiments.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

Various other advantages and benefits will become clear to a person of ordinary skill in the art upon reading the detailed description of the preferred embodiments below. The accompanying drawings are used only for the purpose of illustrating the preferred embodiments and are not to be construed as limitations on the present application. Moreover, the same reference numerals are used to denote the same components throughout the accompanying drawings. In the accompanying drawings:
FIG. 1 is a schematic structural diagram of an electric device provided in some embodiments of the present application;
FIG. 2 is a schematic structural diagram of a battery pack provided in some embodiments of the present application;
FIG. 3 is a partial enlarged schematic structural diagram of the battery pack shown in FIG. 2 at a position A;
FIG. 4 is a schematic structural diagram of a battery cell according to some other embodiments of this application; and

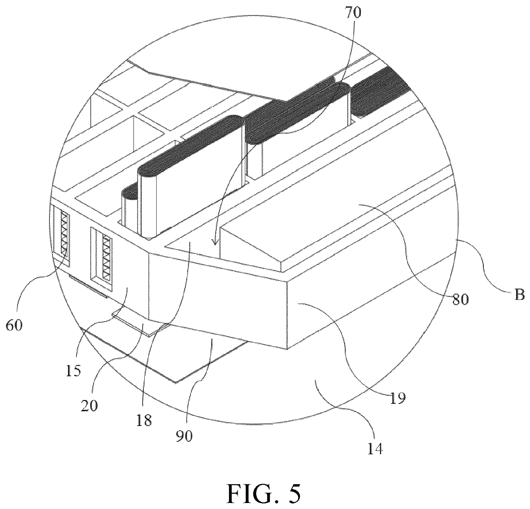

FIG. 5 is a partial enlarged schematic structural diagram of the battery pack shown in FIG. 4 at a position B.

Description of reference numerals:
100. Battery pack; 200. Electric device; 300. Controller; 400. Motor;
10. Box; 11. Sealing cavity; 12. Mounting cavity; 13. First cover body; 14. Second cover body; 15. First side plate; 16. Second side plate; 17. Third side plate; 18. Fourth side plate; 19. Baffle plate; 191. First interface; 192. Second interface;
20. Electrode post;
30. Partition assembly; 31. First separation plate; 32. Second separation plate;
40. Electrode assembly
50. Mounting portion;
60. Heat exchange assembly; 61. Heat exchange plate;
70. Accommodating cavity;
80. High-voltage case;
90. Bus bar;
X-X. First direction;
Y-Y. Second direction.

### DETAILED DESCRIPTION

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, an orientation or positional relationship indicated by technical terms "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", and the like is an orientation or positional relationship shown based on the accompanying drawings, is intended only to facilitate the description of the embodiments of the present application and simplification of the description rather than indicating or implying that an apparatus or an element indicated must have a specific orientation, or be constructed and operated in a specific orientation, and therefore is not intended to be construed as a limitation to the embodiments of the present application.

In the description of the embodiments of the present application, unless otherwise specified and defined explicitly, the technical terms "mounted", "connected to", "connect", "fixed", and the like should be understood in a broad sense, which, for example, may be understood as fixed connection, detachable connection or integral connection, may be understood as mechanical connection, or electrical connection, or may be understood as direct connection, indirect connection via an intermediate medium, or communication between the interiors of two elements or interactions between two elements. A person of ordinary skill in the art may understand the specific meanings of the above terms in the embodiments of the present application according to specific situations.

At present, in view of the development of the market, the use of battery pack is becoming increasingly more widespread. The battery pack is used not only in energy storage power systems such as hydropower, thermal power, wind power, and solar power plants, but also in electric tools such as electric bicycles, electric motorcycles, and electric vehicles, as well as military equipment, aerospace, and many other fields. As an application field of the battery pack continues to expand, a market demand for power batteries continues to increase.

The battery pack related in the embodiments of the present application may be, but not limited to, used in an electric device such as a vehicle, a ship, or an aircraft. A power system of the electric device may be composed of the battery cell, battery, or the like related in this application.

An electric device using a battery pack as a power source in the embodiments of this application may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

It should be understood that the technical solutions described in the embodiments of this application are not limited to being applicable to the battery pack and electrical device described above, but may be applicable to all batteries including a box and electrical devices using the batteries.

The battery pack usually includes a box, and within the box, a cell is placed. To improve the energy density of the battery pack, space within its box needs to be fully used. However, the battery pack has a relatively low inner space utilization rate at present, causing low grouping efficiency for the battery pack.

To increase the inner space utilization rate for the battery pack, the present application provides a battery pack, a sealed cavity of a box is divided into a plurality of independent mounting cavities by a partition assembly, at least a part of the mounting cavities are provided with the electrode assembly, the electrode assembly is electrically connected to an electrode post, and the electrolyte is further disposed in the mounting cavities provided with the electrode assembly, so that the electrolyte and electrode assembly can fully utilize the space within the mounting cavity, increasing the utilization rate for the space within the battery pack.

The structure of the battery pack in this application is described in detail below with reference to the accompanying drawings.

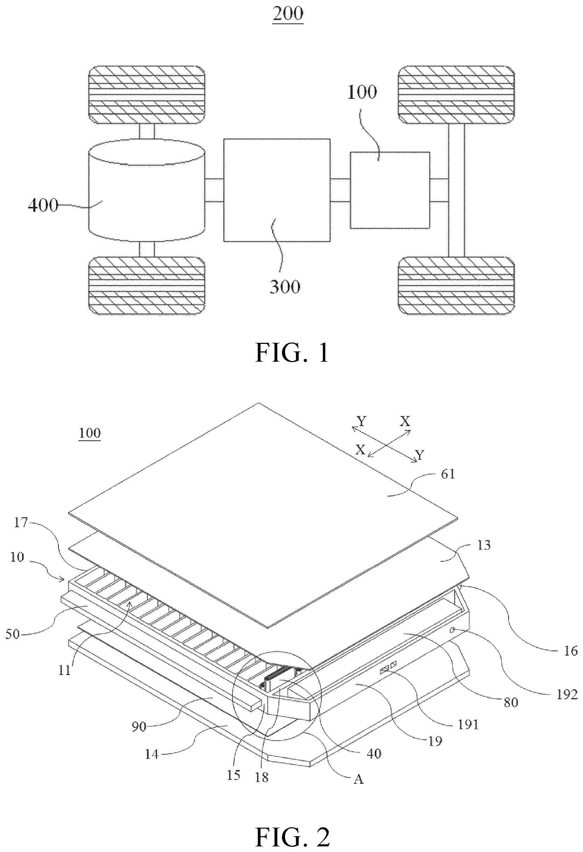

Referring to FIG. 1, FIG. 1 is a schematic structural diagram of an electric device according to some embodiments of the present application. Inside the electric device 200, a battery pack 100 is provided, and the battery pack 100 may be provided at the bottom, head, or tail of the electric device 200. The battery pack 100 may be used to power the electric device 200, for example, the battery pack 100 may be used as an operating power supply of the electric device 200. The electric device 200 may further include a controller 300 and a motor 400, and the controller 300 is used to control the battery pack 100 to power the motor 400, for example, used for a working power requirement during starting, navigating, and driving the electric device 200.

In some embodiments of the present application, the battery pack 100 may be used not only as the operating power supply of the electric device 200, but also as a driving power supply of the electric device 200, instead of or partially instead of fuel or natural gas to provide driving power for the electric device 200.

An embodiment of the present application provides a battery pack 100, as shown in FIG. 2 to FIG. 4, the battery pack 100 includes a box 10, an electrode post 20, a partition assembly 30, an electrode assembly 40, and an electrolyte, a sealed cavity 11 is defined within the box 10, the electrode post 20 is disposed at the box 10, the partition assembly 30 is disposed within the sealed cavity 11 and partitions the sealed cavity 11 into a plurality of independent mounting cavities 12, the electrode assembly 40 is arranged within at least a part of the mounting cavities 12, and the electrode assembly 40 is electrically connected to the electrode post 20; and the electrolyte is filled within the mounting cavities 12 in which the electrode assembly 40 is placed.

As noted, the box 10 here is generally a rectangular body, and within the box 10, a cell is placed. The electrode assembly 40 may be in a shape of a cylinder, a flat body, a cuboid, or the like, which is not limited in the embodiments of the present application. And the present application is described by an example in which the electrode assembly 40 is in a shape of a cuboid.

A battery pack 100 mentioned in the embodiments of the present application refers to a single physical module including one or a plurality of electrode assemblies 40 to provide a higher voltage and capacity. For example, the battery pack 100 mentioned in the present application includes a box 10 for encasing one or a plurality of electrode assemblies 40. The box 10 can prevent liquids or other foreign objects from affecting the charging or discharging of the electrode assemblies 40.

The electrode assembly 40 in the embodiment of the present application consists of a positive electrode plate, a negative electrode plate, and a separator, and the electrode assembly 40 is added with the electrolyte, so that the electrode assembly 40 may cooperate with an electrolyte in the mounting cavity 12 to realize charging or discharging.

For the battery pack 100 in the embodiment of the present application, by providing the partition assembly 30 within the box 10, the sealed cavity 11 can be divided into a plurality of independent mounting cavities 12 in which at least a part of the mounting cavities 12 are provided with the electrode assembly 40, and the mounting cavities 12 provided with the electrode assembly 40 are provided with the electrolyte, and thus, the space within the box 10 can be fully utilized, and the electrolyte and the electrode assemblies 40 can fully utilize the space in the mounting cavities 12, increasing an utilization rate of a space within the battery pack 100 to increase the grouping efficiency of the battery pack 100.

Generally, a cell with a housing is placed in the box 10, and in the present application, the electrode assembly 40 and the electrolyte are directly placed in the mounting cavity 12, that can reduce a space occupied by a housing and reduce a gap between two adjacent cells, increasing an energy density of the battery pack 100, so as to increase the grouping efficiency of the battery pack 100.

In some embodiments, as shown in FIGS. 2 to 4, the partition assembly 30 includes at least one first separation plate 31, the first separation plate 31 is disposed within the box 10 along a first direction X-X which is a length direction or a width direction of the box 10. In FIG. 2, the first direction X-X is the width direction of the box 10. The number of the first separation plate 31 herein may be one or more, and the plurality of first separation plates 31 are disposed at interval, so that the sealing cavity 11 may be divided into a plurality of elongated mounting cavities 12.

The embodiment of the present application, by the partition assembly 30 including at least one first separation plate 31 disposed within the box 10 along the first direction, may enable that the sealed cavity 11 is partitioned into at least two independent mounting cavities 12 by the first separation plate 31, facilitating full utilization of each mounting cavity 12, and that the first separation plate 31 is utilized to form a housing of a cell, reducing a space occupied by the housing of the cell.

In some embodiments, the partition assembly 30 further includes at least one second separation plate 32, and the second separation plate 32 is disposed within the box 10 along a second direction Y-Y which intersects with the first direction X-X.

The second direction Y-Y and the first direction X-X here are generally perpendicular to each other, and may also be set to have other angles, such as 85 degrees or 95 degrees. The number of the second separation plate 32 here may also be multiple, and the battery pack 100 may divide the sealing cavity 11 into multiple mounting cavities 12 in a rectangular shape under the combined action of the first separation plate 31 and the second separation plate 32, and each mounting cavity 12 may be provided with the electrode assembly 40 and the electrolyte, thereby increasing the energy density of the battery pack 100.

The embodiment of this application, by the partition assembly 30 further including at least one second separation plate 32 which is disposed within the box 10 along the second direction Y-Y, may enable that the sealed cavity 11 is partitioned into a plurality of independent mounting cavities 12 by the first separation plate 31, and the second separation plate 32, facilitating full use of each mounting cavity 12 to increase the energy density of the battery pack 100.

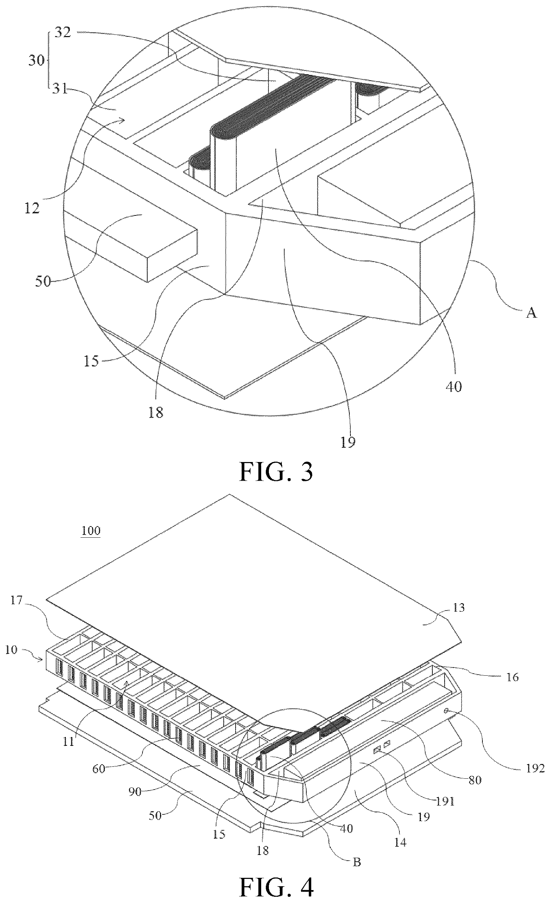

In some embodiments, as shown in FIG. 2 and FIG. 4, the box 10 includes a first cover body 13, and a second cover body 14 for encasing the box 10 from opposite sides, and a side, facing the sealed cavity 11, of at least one of the first cover body 13, and the second cover body 14 is provided with the electrode post 20. There are usually two electrode posts 20, one of which is a positive electrode post 20, and the other one of which is a negative electrode post 20. They may be simultaneously disposed on the first cover body 13 or the second cover body 14. Here, the arrangement of the electrode posts 20 is not described. Here, the first cover body 13, and the second cover body 14 are both plate-shaped structures, and are disposed at an upper end and a lower end of the box 10, respectively.

The embodiments of the present application, by disposing the first cover body 13, and the second cover body 14, and disposing the electrode post 20 at a side, facing the sealed cavity 11, of at least one of the first cover body 13, and the second cover body 14, may enable that energy can be output outward by the electrode post 20.

In some embodiments, the box 10 further includes a first side plate 15, and a second side plate 16 oppositely disposed, the first side plate 15, and the second side plate 16 are disposed at both ends of the box 10 in the first direction X-X, respectively, and at least one of the first side plate 15, and the second side plate 16 is provided with a mounting portion 50.

It should be noted that the first side plate 15, and the second side plate 16 herein are both plate-shaped structures, the mounting portion 50 may be disposed perpendicular to the first side plate 15, the mounting portion 50 may also be disposed perpendicular to the second side plate 16, there are usually two mounting portions 50, and the two mounting portions 50 are disposed on the first side plate 15 and the second side plate 16, respectively, so that the battery pack 100 can be fixed on the box 10 by the mounting portions 50.

The mounting portion 50 herein is usually provided with a mounting hole (not shown), and the mounting portion 50 may be connected to the electrical device 200 by using a connecting member such as a bolt.

The embodiments of the present application, by the first side plate 15, and the second side plate 16 disposed at both ends of the box 10 in the first direction, and at least one of the first side plate 15, and the second side plate 16 provided with the mounting portion 50, may enable that installation of the battery pack 100 can be achieved by the mounting portion 50, achieving fixation of the battery pack 100.

In some embodiments, as shown in FIG. 4, the mounting portion 50 may also be disposed on edges of the first cover body 13 and/or the second cover body 14, and may also have a fixing effect on the battery pack 100. In FIG. 4, the hanging portion 50 is disposed at the edge of the second cover body 14, and does not affect the cooling of the battery pack 100.

In some embodiments of the present application, as shown in FIGS. 2 to 4, the box 10 further includes a third side plate 17, and a fourth side plate 18 oppositely disposed, the third side plate 17, and the fourth side plate 18 are disposed at both ends of the box 10 in the second direction Y-Y, respectively, and the first side plate 15, the second side plate 16, the third side plate 17, the fourth side plate 18, the first cover body 13, and the second cover body 14 are combined to form the sealed cavity 11.

Generally, the first side plate 15, the second side plate 16, the third side plate 17, and the fourth side plate 18 are made by an integral molding process, for example, by injection molding or casting, which can achieve a sealing effect.

The embodiments of the present application, by combining the first side plate 15, the second side plate 16, the third side plate 17, the fourth side plate 18, the first cover body 13, and the second cover body 14 to form the sealed cavity 11, enables that the box 10 may be a rectangular structure, which is a simple structure, and can be easy to implement.

In some embodiments, as shown in FIGS. 2 to 4, at least one of the first cover body 13, and the second cover body 14 is hermetically connected to the first side plate 15, the second side plate 16, the third side plate 17, and the fourth side plate 18.

The first cover body 13, and the second cover body 14 herein may be respectively connected to the first side plate 15, the second side plate 16, the third side plate 17, and the fourth side plate 18 in a sealed connection structure. For example, connection may be achieved by a welding, bonding, screwing, or interference-fit structure, and sealing is made by a sealant, foam, or the like.

The embodiments of the present application, by hermetically connecting at least one of the first cover body 13, and the second cover body 14 to the first side plate 15, the second side plate 16, the third side plate 17, and the fourth side plate 18, may achieve sealing of the sealing cavity 11, reducing the probability of electrolyte leakage within the sealing cavity 11.

In some embodiments, as shown in FIGS. 2 to 4, the box 10 further includes a baffle plate 19, and the baffle plate 19, the first cover body 13, the second cover body 14, and one of the first side plate 15, the second side plate 16, the third side plate 17, and the fourth side plate 18 are combined to form the accommodating cavity 70.

In this embodiment, the baffle plate 19 and the fourth side plate 18 are combined to form the accommodating cavity 70, wherein the baffle plate 19 is a rectangular structure with an opening, and may form the accommodating cavity 70 in a trapezoidal structure with openings at both ends for the fourth side plate 18, and the accommodating cavity 70 is used for placing electrical devices such as a high-voltage case 80. Of course, the accommodating cavity 70 may also be formed by combining the baffle plate 19, and the third side plate 17, which is not be illustrated here.

The embodiments of the present application, by disposing the baffle plate 19 and forming the accommodating cavity 70 by combining the baffle plate 19 with the first cover body 13, the second cover body 14, and one of the first side plate 15, the second side plate 16, the third side plate 17, and the fourth side plate 18, may enable that electrical devices of a battery pack 100 are placed in the accommodating cavity 70, achieving the function of the battery pack 100.

In some embodiments, to enable function output of the battery pack 100, a first interface 191, and a second interface 192 are provided in the baffle plate 19, wherein the number of the first interface 191 is two, and the first interfaces 191 are used for passing high-voltage wires there through to connect the wires to the high-voltage case 80. The number of the second interface 192 is one, and the second interface 192 is used for outputting a low-voltage wire, facilitating monitoring of a parameter of the battery pack 100, such as a temperature or other parameters.

It should be noted that the high-voltage case 80 herein may be disposed in the accommodating cavity 70 by using a structure such as a bolt or a buckle, and details are not described herein again.

In some embodiments, the battery pack 100 further includes a bus bar 90, and a foil sheet (not shown), wherein the foil sheet is disposed on the bus bar 90 and is connected to each of the electrode post 20, and the high-voltage case 80, so that the energy of the battery pack 100 can be output by the high-voltage case 80.

In some embodiments, as shown in FIG. 2 and FIG. 4, the battery pack 100 further includes a heat exchange assembly 60, the heat exchange assembly 60 is disposed on the box 10, and in FIG. 2, the heat exchange assembly 60 which is independently disposed may be connected to the first cover body 13 of the box 10 to cool the battery pack 100, and may be a structure of a cooling plate.

The heat exchange assembly 60 includes a heat exchange plate 61, and a side, facing away from the sealed cavity 11, of at least one of the first cover body 13, and the second cover body 14 abuts against the heat exchange plate 61. The heat exchange plate 61 herein may be a water cooling plate or other structures.

The embodiments of this application, by disposing the heat exchange plate 61 and abutting the side, away from the sealed cavity 11, of at least one of the first cover body 13, and the second cover body 14 against the heat exchange plate 61, may achieve heat exchange for the battery pack 100 by the heat exchange plate 61.

Alternatively, the heat exchange assembly 60 may also be integrated inside the partition assembly 30 to form a cooling channel inside the partition assembly 30, thereby cooling the battery pack 100. In FIG. 4, there are multiple cooling channels, all of which are integrated inside the first separation plate 31, and both ends of the first separation plate 31 are provided with a liquid inlet, and a liquid outlet, respectively. In this embodiment, the position of the hanging portion 50 is improved, and the hanging portion 50 is disposed at both ends of the second cover body 14 in the first direction X-X.

It should be noted that the cooling channels herein are in communication with each other. That is, the interiors of different first separation plates 31 are in communication with each other.

The embodiments of this application, by disposing the heat exchange assembly 60 and disposing the heat exchange assembly 60 on the box 10 or inside the partition assembly 30, may achieve colling for the battery pack 100 to reduce the temperature of the battery pack 100.

In some embodiments, at least a partial surface of the partition assembly 30, and an inner surface of the box 10 are provided with an insulating layer, or both the partition assembly 30 and the box 10 are insulating members.

The partition assembly 30 herein may be metal, and may be formed by processes such as extrusion molding, casting, machining, etc., to increase the strength of the partition assembly 30. However, to achieve the insulation property of the partition assembly 30, it is necessary to spray an insulating layer on a surface, facing the electrode assembly 40 and the electrolyte, of the partition assembly 30, and that can be achieved by spraying an insulating layer on the outer surface of the partition assembly 30. Of course, the partition assembly 30 herein may also be made of a material having an insulation property, such as plastic.

Similarly, for the box 10, an inner surface of the box 10 may be provided with an insulating layer, or the box 10 may be directly made of a plastic material having an insulating property, so that the partition assembly 30 and the box 10 may be used to form a sealed cavity 11 having pressure resistance and a sealing property.

The embodiments of the present application, by providing the insulating layer for at least a partial surface of the partition assembly 30 and the inner surface of the box 10, or providing both the partition assembly 30 and the box 10 as the insulating members, may improve the box 10 in terms of an insulation property.

The battery pack 100 includes a plurality of electrode assemblies 40, and a plurality of electrode posts 20 corresponding to the plurality of electrode assemblies 40, and a plurality of electrode posts 20 are disposed at a side, facing the sealed cavity 11, of at least one of the first cover body 13, and the second cover body 14.

The embodiments of the present application, by providing the plurality of electrode posts 20 at the side, facing the sealed cavity 11, of at least one of the first cover body 13, and the second cover body 14, may enable integrated provision of the plurality of electrode posts 20, facilitating installation of the plurality of electrode posts 20, and facilitating connection of the plurality of electrode posts 20 to corresponding foil sheets, and connection with the high-voltage case 80.

An embodiment of the present application also provides an electric device 200, including the battery pack 100 described in the above embodiments.

The electrical device 200 herein may be a product, such as a vehicle, mentioned above, and details are not described herein again.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

The battery pack 100 includes a box 10, an electrode post 20, a partition assembly 30, an electrode assembly 40, and an electrolyte, a sealed cavity 11 is defined within the box 10, the electrode post 20 is disposed in the box 10, the partition assembly 30 is disposed within the sealed cavity 11 and partitions the sealed cavity 11 into a plurality of independent mounting cavities 12, the electrode assembly 40 is arranged within at least a part of the mounting cavities 12, and the electrode assembly 40 is electrically connected to the electrode post 20; and the electrolyte is filled within the mounting cavities 12 in which the electrode assembly 40 is placed.

Further, the partition assembly 30 includes at least one first separation plate 31, the first separation plate 31 is disposed within the box 10 along a first direction X-X which is a length direction or a width direction of the box 10.

Further, the partition assembly 30 further includes at least one second separation plate 32, and the second separation plate 32 is disposed within the box 10 along a second direction Y-Y which intersects with the first direction X-X.

Further, the box 10 includes a first cover body 13, and a second cover body 14 for encasing the box 10 from opposite sides, and at least one of the first cover body 13, and the second cover body 14 is provided with the electrode post 20.

Further, the box 10 further includes a first side plate 15, and a second side plate 16 oppositely disposed, the first side plate 15, and the second side plate 16 are disposed at both ends of the box 10 in the first direction X-X, respectively, and at least one of the first side plate 15, and the second side plate 16 is provided with a mounting portion 50.

Further, edges of the first cover body 13 and/or the second cover body 14 are provided with a mounting portion 50.

Further, the box 10 further includes a third side plate 17, and a fourth side plate 18 oppositely disposed, the third side plate 17, and the fourth side plate 18 are disposed at both ends of the box 10 in the second direction Y-Y, respectively, and the first side plate 15, the second side plate 16, the third side plate 17, the fourth side plate 18, the first cover body 13, and the second cover body 14 are combined to form the sealed cavity 11.

Further, at least one of the first cover body 13, and the second cover body 14 is hermetically connected to the first side plate 15, the second side plate 16, the third side plate 17, and the fourth side plate 18.

Further, the box 10 further includes a baffle plate 19, and one of the first side plate 15, the second side plate 16, the third side plate 17, and the fourth side plate 18, the baffle plate 19, the first cover body 13, and the second cover body 14 are combined to form the accommodating cavity 70.

Further, the battery pack 100 further includes a heat exchange assembly 60, and the heat exchange assembly 60 is disposed on the box 10 or inside the partition assembly 30.

The heat exchange assembly 60 includes a heat exchange plate 61, and a side, facing away from the sealed cavity 11, of at least one of the first cover body 13, and the second cover body 14 abuts against the heat exchange plate 61.

Further, at least a partial surface of the partition assembly 30, and an inner surface of the box 10 are provided with an insulating layer, or both the partition assembly 30, and the box 10 are insulating members.

Further, the battery pack 100 includes a plurality of electrode assemblies 40, and a plurality of electrode posts 20 corresponding to the plurality of electrode assemblies 40, and the plurality of electrode posts 20 are disposed at a side, facing the sealed cavity 11, of at least one of the first cover body 13, and the second cover body 14.

The above descriptions are merely preferred specific embodiments of the present application, and are not intended to limit the protection scope of the present application. The changes or replacements readily figured out by those skilled in the art within the technical scope disclosed in the present application shall all fall within the protection scope of the present application. Therefore, the protection scope of the present application should be subject to the protection scope of claims.

## Claims

1. A battery pack, the battery pack comprising:
a box within which a sealed cavity is defined;
an electrode post disposed at the box;
a partition assembly disposed within the sealed cavity and partitioning the sealed cavity into a plurality of independent mounting cavities;
an electrode assembly disposed in at least a part of the mounting cavities, the electrode assembly being electrically connected to the electrode post; and
an electrolyte filled in the mounting cavities in which the electrode assembly is placed.

2. The battery pack according to claim 1, wherein the partition assembly comprises at least one first separation plate, and the first separation plate is disposed within the box along a first direction which is a length direction or a width direction of the box.

3. The battery pack according to claim 1 or 2, wherein the partition assembly further comprises at least one second separation plate, and the second separation plate is disposed within the box along a second direction which intersects with the first direction.

4. The battery pack according to any one of claims 1 to 3, wherein the box comprises a first cover body and a second cover body for encasing the box from two opposite sides, and the electrode post is provided on a side, facing the sealed cavity, of at least one of the first cover body and the second cover body.

5. The battery pack according to any one of claims 1 to 4, wherein the box further comprises a first side plate and a second side plate arranged opposite to each other, and the first side plate and the second side plate are respectively disposed at the two ends of the box along the first direction, and at least one of the first side plate and the second side plate is provided with a mounting portion.

6. The battery pack according to any one of claims 1 to 4, wherein an edge of the first cover body and/or the second cover body is provided with a mounting portion.

7. The battery pack according to any one of claims 1 to 4, wherein the box further comprises a third side plate and a fourth side plate arranged opposite to each other, the third side plate and the fourth side plate are respectively disposed at the two ends of the box along the second direction, and the first side plate, the second side plate, the third side plate, the fourth side plate, the first cover body, and the second cover body enclose the sealed cavity.

8. The battery pack according to claim 7, wherein at least one of the first cover body and the second cover body is hermetically connected to the first side plate, the second side plate, the third side plate, and the fourth side plate.

9. The battery pack according to claim 7, wherein the box further comprises a baffle plate, and one of the first side plate, the second side plate, the third side plate, and the fourth side plate, together with the baffle plate, the first cover body, and the second cover body, encloses an accommodating cavity.

10. The battery pack according to any one of claims 2 to 9, wherein the battery pack further comprises a heat exchange assembly disposed on the box or inside the partition assembly.

11. The battery pack according to claim 10, wherein the heat exchange assembly comprises a heat exchange plate, and at least one of the first cover body and the second cover body has its side, which faces away from the sealed cavity, attached to the heat exchange plate.

12. The battery pack according to any one of claims 1 to 9, wherein at least a partial surface of the partition assembly, and an inner surface of the box are provided with an insulating layer, or both the partition assembly and the box are insulating members.

13. The battery pack according to any one of claims 4 to 9, wherein the battery pack comprises a plurality of electrode assemblies and a plurality of electrode posts corresponding to the plurality of electrode assemblies, and the plurality of electrode posts are provided on a side, facing the sealed cavity, of at least one of the first cover body, and the second cover body.

14. An electric device, comprising the battery pack according to any one of claims 1 to 13.
